(19) Europäisches Patentamt
European Patent Office
Office européen des brevets

(11) **EP 4 452 667 B1**

(12) **EUROPEAN PATENT SPECIFICATION**

(45) Date of publication and mention
of the grant of the patent:
**25.02.2026 Bulletin 2026/09**

(21) Application number: **21847635.6**

(22) Date of filing: **23.12.2021**

(51) International Patent Classification (IPC):
**B60C 7/14** *(2006.01)*　　**B60C 9/18** *(2006.01)*
**B60C 7/12** *(2006.01)*

(52) Cooperative Patent Classification (CPC):
**B60C 7/146; B60C 7/12; B60C 9/18**

(86) International application number:
**PCT/US2021/065032**

(87) International publication number:
**WO 2023/121669 (29.06.2023 Gazette 2023/26)**

(54) **NON-PNEUMATIC TIRE WITH REINFORCEMENTS IN SHEAR BAND FOR WEIGHT REDUCTION**

LUFTLOSER REIFEN MIT VERSTÄRKUNGEN IM SCHERBAND ZUR GEWICHTSREDUZIERUNG

PNEU SANS AIR AVEC RENFORTS DANS LA BANDE DE CISAILLEMENT POUR LA RÉDUCTION DU POIDS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.10.2024 Bulletin 2024/44**

(73) Proprietor: **COMPAGNIE GENERALE DES ETABLISSEMENTS MICHELIN**
**63000 Clermont-Ferrand (FR)**

(72) Inventor: **RADULESCU, Robert Ciprian**
**Greenville, South Carolina 29605 (US)**

(74) Representative: **Casalonga**
**Casalonga & Partners**
**Bayerstraße 71/73**
**80335 München (DE)**

(56) References cited:
WO-A1-2019/125462　　US-A1- 2010 307 653
US-A1- 2014 367 007　　US-A1- 2017 008 342
US-A1- 2019 375 239　　US-A1- 2020 009 916
US-A1- 2020 276 861

**Description**

FIELD OF THE INVENTION

The subject matter of the present invention relates to a non-pneumatic tire that includes reinforcements within the shear band that allow the resulting shear band to achieve the same deflection as those without reinforcements yet have a reduced weight. More particularly, the present application involves one or more layers of cylindrical reinforcements that extend through the width of the shear band to maximize the empty volume within the shear band to maximize weight reduction for rolling resistance gains.

BACKGROUND

Non-pneumatic tires improve vehicle uptime and safety as compared to conventional pneumatic tires when the later experience air loss. Non-pneumatic tires are constructed of a support structure that can be a plurality of spokes that engage a shear band that connects the spokes and supports tread of the non-pneumatic tire. The non-pneumatic tire load carrying capacity is provided mainly by the thickness of the shear band, the width of the shear band, and the shear modulus. The thickness of the shear band is the size of the shear band in the radial direction, and the width of the shear band is the length of the shear band in an axial direction. Increasing these parameters causes an increase in the load carrying capacity of the non-pneumatic tire. Vehicle constraints limit the width and shear modulus of the shear band, which leaves the thickness of the shear band as the only variable that can be adjusted to increase the load carrying capacity of the non-pneumatic tire.

Unfortunately, increasing the thickness of the shear band causes the shear band temperature, weight, and rolling resistance to likewise increase. The tire temperature increase can be mitigated through the provision of specific treads that run cooler, or through pairing of the non-pneumatic tire with vehicles that have less severe vehicle duty cycles. However, the increase in the weight and rolling resistance of the shear band remains a significant hurdle to overcome, especially when considering the tire life cycle analysis Document US 2017/008342 A1 discloses a non-pneumatic tire that includes hollow reinforcements within a shear band.

BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

Fig. 1 is a side view of a non-pneumatic tire with a shear band that includes weight reduction elements.

Fig. 2 is a side view of a portion of a non-pneumatic tire with a shear band that includes a matrix and weight reduction elements, wherein said non-pneumatic tire does not fall under the definition of the claims,

Fig. 3 is a cross-sectional view taken along line 3-3 of Fig. 2.

Fig. 4 is a side view of a portion of a non-pneumatic tire with a shear band that includes two layers of weight reduction elements.

Fig. 5 is a close-up side view of the shear band and tread of Fig. 4.

Fig. 6 is a side view of a portion of a non-pneumatic tire with a shear band that includes three layers of weight reduction elements.

Fig. 7 is a side view of a portion of a non-pneumatic tire with a shear band that includes five layers of weight reduction elements.

Fig. 8 is a side view of a portion of a non-pneumatic tire with a shear band that includes two cross-ply belts located between layers of weight reduction elements.

Fig. 9 is a side view of a portion of a non-pneumatic tire with a shear band that includes two cross-ply belts and four layers of weight reduction elements.

Fig. 10 is a side view of a portion of a non-pneumatic tire with a shear band that includes oval and triangular shaped weight reduction elements.

Fig. 11 is a cross-section view of halves of two adjacent weight reduction elements in the shear band.

Fig. 12 is a chart of shear band weight reduction for different sizes of weight reduction elements in the shear band.

Fig. 13 is a side view of a portion of a non-pneumatic tire with a shear band that includes two plates and three layers of weight reduction elements.

Fig. 14 is a side view of a portion of a shear band that includes layers of weight reduction elements that feature different spacing between the different layers.

Fig. 15 is a side view of a portion of a shear band that includes three layers of weight reduction elements that increase in size from layer to layer outward in the radial direction.

Fig. 16 is a side view of a portion of a shear band that includes five layers of weight reduction elements that increase in size from layer to layer outward in the radial direction.

The use of identical or similar reference numerals in different figures denotes identical or similar features.

<u>DETAILED DESCRIPTION OF THE INVENTION</u>

Reference will now be made in detail to embodiments of the invention, one or more examples of which are illustrated in the drawings. Each example is provided by way of explanation of the invention, and not meant as a limitation of the invention. For example, features illustrated or described as part of one embodiment can be used with another embodiment to yield still a third embodiment. It is intended that the present invention include these and other modifications and variations.

The present invention provides for a non-pneumatic tire 10 with a shear band 18 that has weight reduction elements 22 that can provide significant reductions in the non-pneumatic tire 10 weight and rolling resistance while maintaining or improving shear band 18 fatigue resistance. The shear band 18 includes a matrix 20 that can be made of rubber or composite rubber-fiber-resin compound, with a plurality of weight reduction elements 22 disposed within the matrix 20 that are made of a different material composition, such as composite glass-resin material, than the matrix 20. The weight reduction elements 22 include voids 30 that facilitate weight reduction within the shear band 18. The weight reduction elements 22 could be shaped as hollow cylinders, and may be arranged in one or more layers 40, 42 in the circumferential direction 28 in some embodiments.

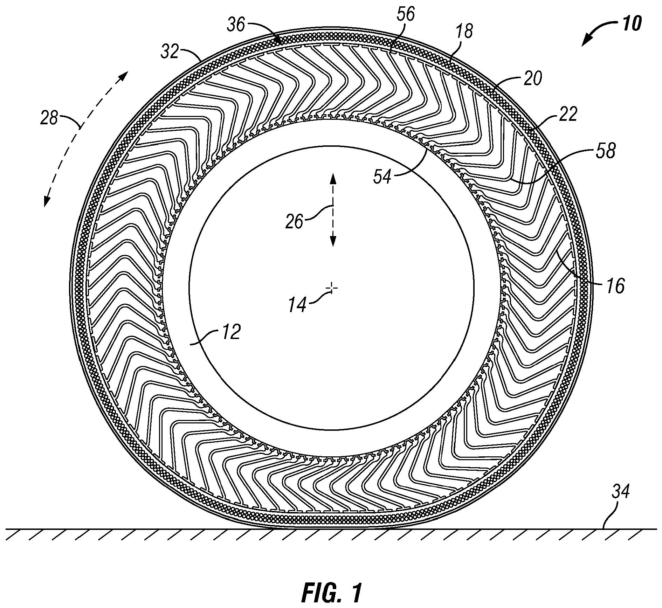

Fig. 1 is a side view of a non-pneumatic tire 10 that includes the weight reduction elements 22 in the shear band 18. The non-pneumatic tire 10 has a hub 12 that can be attached to the wheel of a vehicle. A central axis 14 extends through the center of the hub 14, and the non-pneumatic tire 10 rotates around the central axis 14. A support structure 16 extends outward from the hub 12 in the radial direction 26 and can be variously configured. As shown, the support structure 16 is provided as a plurality of spokes that are attached on one end to the hub 12 and on an opposite end in the radial direction 26 to a shear band 18 that extends completely around the central axis 14 three hundred and sixty degrees in the circumferential direction 28. In other embodiments, the support structure 16 is not configured as spokes but is instead a web structure, a disc structure, or other configuration. The shear band 18 functions to tie the spokes 16 together and provide support to the non-pneumatic tire 10. The shear band 18 also supports tread 32 that is located on the shear band 18 and is outward from the shear band 18 in the radial direction 26. The tread 32 can have any tread pattern on it and may be attached to the shear band 18 in any manner.

The non-pneumatic tire 10 engages the road surface 34 as shown in Fig. 1 and the weight of the vehicle causes a deformation of the non-pneumatic tire 10 in certain areas. The tread 32 and shear band 18 flatten out in the area of the contact patch at the engagement with the road surface 34. The spokes 16 proximate to the road surface 34 near the contact patch also become distorted due to the deformation of the non-pneumatic tire 10 in this area. The spokes 16 that are distorted the most are the ones between the road surface 34 and the central axis 14. Spokes 16 on the opposite side of the non-pneumatic tire 10 of the central axis 14, which are at the top of the non-pneumatic tire 10 in Fig. 1, are pulled into tension.

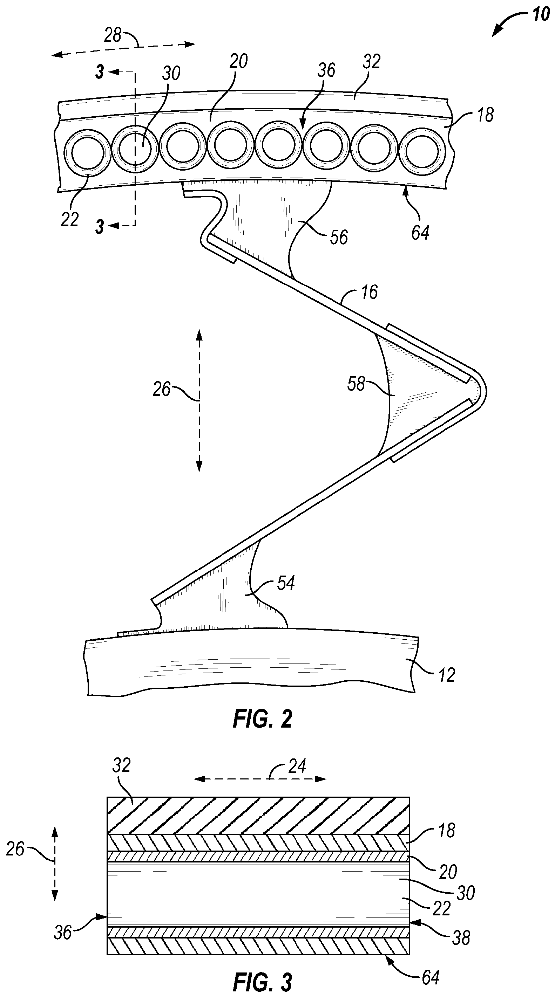

Fig. 2 is a side view of a portion of a different exemplary embodiment of the non-pneumatic tire **10** not falling under the definition of the claims, but which is useful for understanding the invention. The support structure 16 is again configured as a spoke, but of a different configuration than that as shown in Fig. 1. The spoke 16 includes multiple pieces of rubber that are assembled together and then subsequently cured. The spoke 16 has a foot 54 that is attached to the outer surface of the hub 12 in the radial direction 26. The opposite side of the spoke 16 has a foot 56 that is attached to the inner surface of the shear band 18 in the radial direction 26. A nose 58 of the spoke 16 is at the midpoint of the spoke 16 in the radial direction 26. Legs of the spoke 16 extend from the nose 58 to the feet 54, 56. It is to be understood that the spoke 16 disclosed is only exemplary and that other configurations are possible in other embodiments such that they do, or do not, include the nose 58, feet 54, 56 and legs or are configured differently.

The shear band 18 includes a plurality of weight reduction elements 22 that are disposed within a matrix 20. The material composition of the weight reduction elements 22 is different than that of the matrix 20. In this regard, although some of the same material or materials may be in both the matrix 20 and weight reduction elements 22, they are not in the same ratio or amounts. In other embodiments, there is a material in the weight reduction elements 22 that is not present in the matrix 20, and in other embodiments there is a material in the matrix 20 that is not found in the weight reduction elements 22. In some instances, the weight reduction elements 22 are made of composite glass-resin material, and the matrix 20 is made of rubber or composite rubber-fiber-resin compounds, or is simply void. The modulus of elasticity of one of the weight reduction elements 22 is 30-50 Gigapascal (GPa). The weight reduction elements 22 are arranged in a single layer in that they are all located the same distance from the central axis 14 in the radial direction 26. The weight reduction elements 22 are contained within the matrix 20 such that the matrix 20 is located both inward and outward of the weight reduction elements 22 in the radial direction 26. The foot 56 thus engages the matrix 20 and does not engage the weight reduction elements 22. However, in other embodiments the support structure 16 could instead engage the weight reduction elements 22, or could engage both the weight reduction elements 22 and the matrix 20, or could engage a plate and thus be out of engagement with both the matrix 20 and the weight reduction elements 22.

The weight reduction elements 22 are in the shape of hollow cylinders and are oriented so that they engage immediately successive ones of the weight reduction elements 22 in the circumferential direction 28. In this regard, one of the weight reduction elements 22 will engage another just forward of it in the circumferential direction 28, and will engage another just backwards of it in the circumferential direction 28. All of the weight reduction elements 22 can be configured the same as one another along the entire circumferential length of the shear band 18. In this regard, they all have the same inner and outer diameters and are all made of the same material, within the same layer 40, 42. In some embodiments, the weight reduction elements 22 can be of different inner and outer diameter and material. The tread 32 engages the matrix 20 but does not engage any of the weight reduction elements 22, although the tread 32 could engage one or all of the weight reduction elements 22 in other embodiments.

A cross-sectional view along line 3-3 is shown in Fig. 3. This cross-sectional view is of the shear band 18 and the tread 32, but does not include the support structure 16 or the hub 12. The shear band 18 has a first terminal lateral end 36 and an oppositely disposed second terminal lateral end 38. These ends 36, 38 are separated from one another in the axial direction 24. The axial direction 24 is a direction that is parallel to the central axis 14, and is oriented at a 90 degree angle to the radial direction 26. The weight reduction element 22 extends the entire width of the shear band 18 in the axial direction 24 such that the weight reduction element 22 is exposed on the first terminal lateral end 36 and the second terminal lateral end 38. The weight reduction element 22 has a void 30 that likewise extends the entire width of the shear band 18 in the axial direction 24 to cause an opening in the shear band 18 to be present from the end 36 to end 38. The matrix 20 extends the entire width of the shear band 18 in the axial direction 24 both above and below the weight reduction element 22 in the radial direction 26.

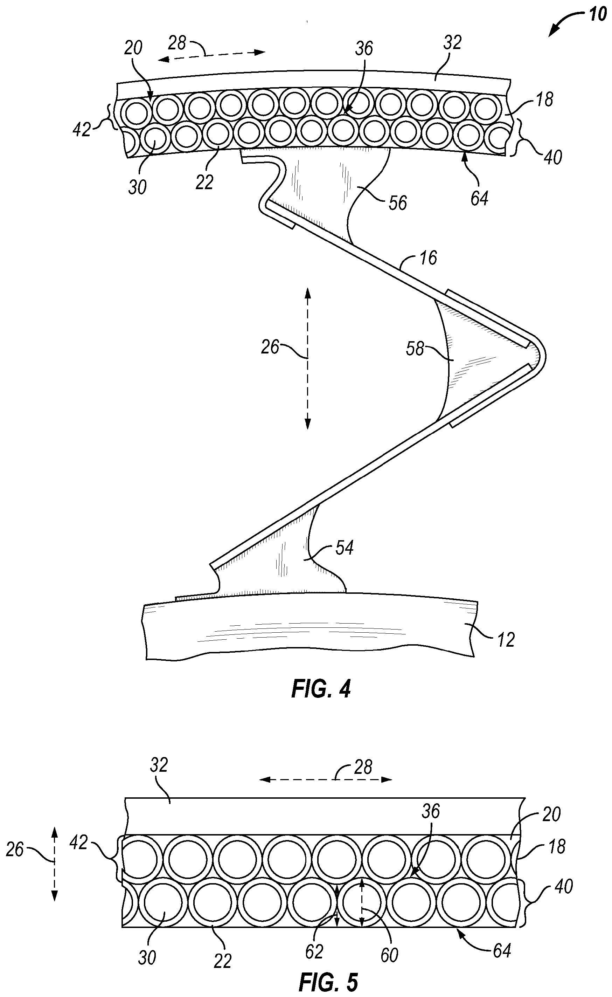

Another embodiment of the non-pneumatic tire 10 is illustrated with reference to Fig. 4 in which the shear band 18 has a first layer 40 of the weight reduction elements 22 and a second layer 42 of weight reduction elements 22. The matrix 20 is still present and the weight reduction elements 22 are again disposed therein. In the radial direction 26, the weight reduction elements 22 extend to the upper and inner ends of the shear band 18. The first layer 40 is an inner layer of the weight reduction elements 22 and is at the inner side of the shear band 18 in the radial direction 26. The second layer 42 is an outer layer of the weight reduction elements 22 and is at the outer side of the shear band 18 in the radial direction 26. The weight reduction elements 22 of the first layer 40 engage those of the second layer 42 and likewise engage immediately successive ones of the weight reduction elements 22 of the first layer 40 in the circumferential direction 28. In a similar manner, the weight reduction elements 22 of the second layer 42 engage immediately successive ones of the weight reduction elements 22 of the second layer 42 in the circumferential direction 28, and also engage weight reduction elements 22 of the first layer 40. The weight reduction elements 22 assigned to the first layer 40 are all located the same distance from the central axis 14 in the radial direction 26. Similarly, the weight reduction elements 22 of the second layer 42 are all located the same distance from the central axis 14 in the radial direction 26. The second layer 42 is outward from the first layer 40 in the radial direction 26.

A close-up side view of the shear band 18 and tread 32 is shown with reference to Fig. 5 in which the shear band 18 includes two layers 40, 42 of weight reduction elements 22. It can be seen that some of the matrix 20 is located between the weight reduction elements 22 of the first layer 40 and the second layer 42. The matrix 20 is likewise located between successive elements 22 of the first layer 40, and between successive elements 22 of the second layer 42 in the circumferential direction 28. The inner surface 64 of the shear band 18 is identified, and the farthest outward location of one of the weight reduction elements 22 of the first layer 40 from the inner surface 64 in the radial direction 26 is identified as distance 60. The closest location of one of the weight reduction elements 22 of the second layer 42 to the inner surface 64 in the radial direction 26 is identified as distance 62. It can be seen that distance 62 is less than distance 60 so that portions of the elements 22 of the second layer 42 are closer to the inner surface 64 than are portions of the elements 22 of the first layer 40. This is because the elements 22 of the second layer 42 are nested within a gap between immediately successive elements 22 in the first layer 40. Likewise, portions of the elements 22 of the first layer 40 are farther from the inner surface 64 in the radial direction 26 than are portions of the elements 22 of the second layer 42. The weight reduction elements 22 extend all the way to the inner layer 64 to engage the support structure 16, and the outer layer so that they engage the tread 32.

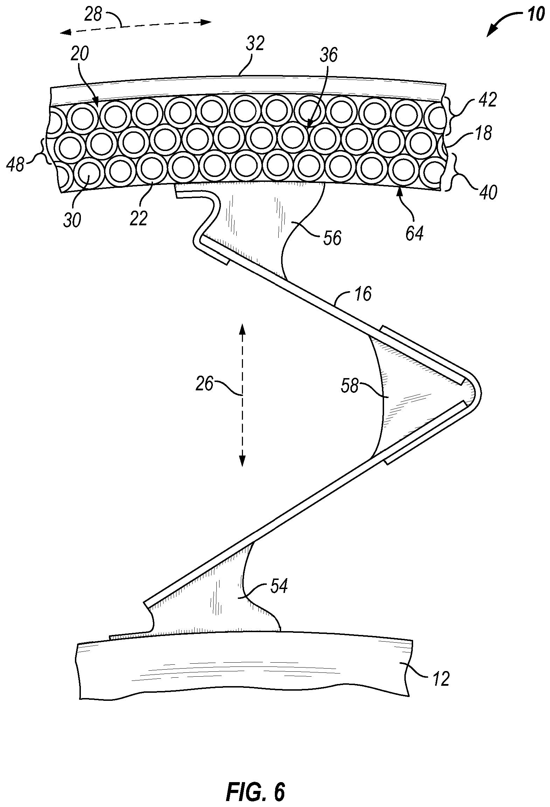

Fig. 6 is another embodiment in which the weight reduction elements 22 are again provided as hollow cylinders and are arranged into a first layer 40, second layer 42, and a third layer 48 that is located between the first and second layers 40, 42 in the radial direction 26. The weight reduction elements 22 of each of the layers 40, 42, 48 are positioned the same distance in the radial direction 26 from the central axis 14 or inner surface 64. The position of each layer 40, 42, 48 could be measured by measuring to the center of the voids 30 of the weight reduction elements 22. Due to the nesting of the elements 22 of the third layer 48 into the weight reduction elements 22 of the first and second layers 40, 42 it is the case that some portions of the elements 22 of the third layer 48 are closer to the central axis 14/inner surface 64 than are some portions of the elements 22 of the first layer 40. Likewise due to this nesting, some portions of the elements 22 of the third layer 48 are farther from the central axis 14 / inner surface 64 in the radial direction 26 than are some portions of the elements 22 of the second layer 42.

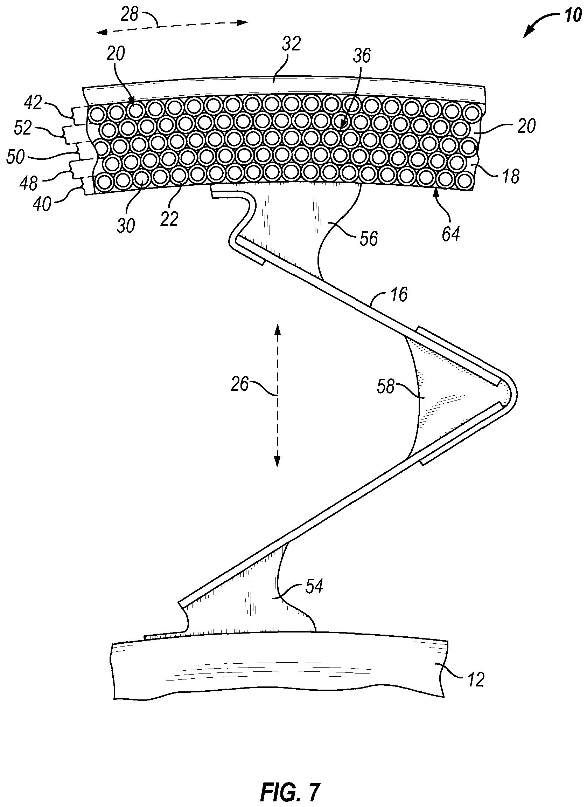

Any number of layers of the weight reduction elements 22 can be included in the shear band 18. The capability of manufacturing smaller weight reduction elements 22 may put a limit on the number of layers that could be included. Fig. 7 shows an embodiment in which five layers 40, 42, 48, 50, 52 are present that each include a certain amount of the weight reduction elements 22 which are all again configured as hollow cylinders with voids 30 through their center that function to reduce the weight of the shear band 18. Due to the layers 40, 42, 48, 50, 52 being different distances from the central axis 14 in the radial direction 26 the layers 40, 42, 48, 50, 52 may have a different number of elements 22 in them as the layers 40, 42, 48, 50, 52 extend in the circumferential direction 28 completely around the non-pneumatic tire 10. The first layer 40 is the inner layer and is closest to the inner surface 64. The second layer 42 is the outer layer and is farthest from the inner surface in the radial direction 26.

The third layer 48 is outward from and immediately adjacent to the first layer 40. Again, some portions of the elements 22 of the third layer 48 are closer to the inner surface 64 than are portions of the first layer 40 due to the nesting arrangement between the first 40 and third 48 layers. The fourth layer 50 is the middle layer of the shear band 18 and is likewise nested with the third layer 48 so some portions of the elements 22 of the fourth layer 50 are closer to the inner surface 64 than some portions of the elements 22 of the third layer 48. The fifth layer 52 is positioned outward from the fourth layer 40 in the radial direction 26, but again some portions of the elements 22 of the fifth layer 52 are closer to the inner surface 64 than some portions of the elements 22 of the fourth layer 50. The outer second layer 42 is immediately outward from the fifth layer 52 and due to the nesting of the elements 22 between the second 42 and fifth 52 layers some of the elements 22 of the second layer 42 are closer to the inner surface 64 than some portions of the fifth layer 52. The immediately adjacent layers 40, 48, 50, 52, 42 engage one another, however this need not be true in other exemplary embodiments. The layers 40, 48, 50, 52, 42 fill the thickness of the shear band 18 up in the radial direction 26, and the matrix 20 is located between all of the weight reduction elements 22.

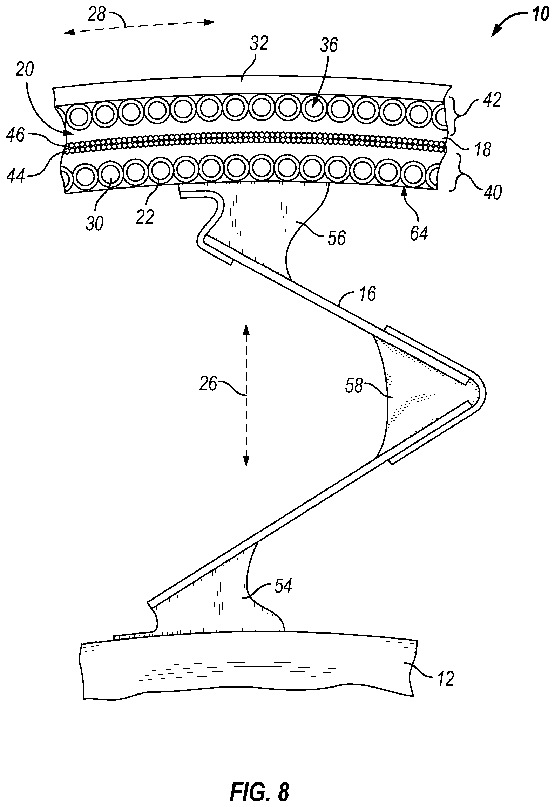

Another configuration of the shear band 18 is shown with reference to Fig. 8 in which first and second layers 40, 42 are made of hollow cylinder weight reduction elements 22 that extend along the entire circumferential length of the shear band 18 in the circumferential direction 28. Immediately successive ones of the weight reduction elements 22 engage one another in each one of the two layers 40, 42. The first layer 40 is the inner layer of the shear band 18, and the second layer 42 is the outer layer. A pair of cross-plied belts 44, 46 are located between the two layers 40, 42 in the radial direction 26. The cross-plied belts 44, 46 can be made of nylon or other material, and can be a material different from and not included in the matrix 20 or weight reduction elements 22. The cross-plied belts 44, 46 are each made of a plurality of strands of this material and extend completely around the circumference of the shear band 18 in the circumferential direction 28. The cross-plied belts 44, 46 extend at an angle to the circumferential direction 28 that is not 90 degrees and that is not 0 degrees. The cross-plied belts 44, 46 can extend at an angle that is the same magnitude as one another, but may be oriented 90 degrees to one another. In this regard, the first cross-plied belt 44 could be oriented at an angle of +45 degrees to the circumferential direction 28, and the second cross-plied belt 46 could be oriented at an angle of -45 degrees to the circumferential direction 28. Although visible in the side view of Fig. 8, the cross-plied belts 44, 46 could be completely contained within the matrix 20 so that they cannot be seen at the first terminal lateral end 36. In this regard, the cross-plied belts 44, 46 could be completely contained within the matrix 20 so that they are spaced from and not in engagement with either of the terminal lateral ends 36, 38 and are not in engagement with the inner surface 64 or the upper surface of the shear band 18. The cross-plied belts 44, 46 are spaced from both the first layer 40 and second layer 42 so that they do not engage any of the weight reduction elements 22. The matrix 20 thus completely fills the gaps between the belts 44, 46 to isolate them from engagement with the weight reduction elements 22, but the cross-plied belts 44, 46 may engage one another. In other embodiments, the first cross-plied belt 44 does not engage the second cross-plied belt 46.

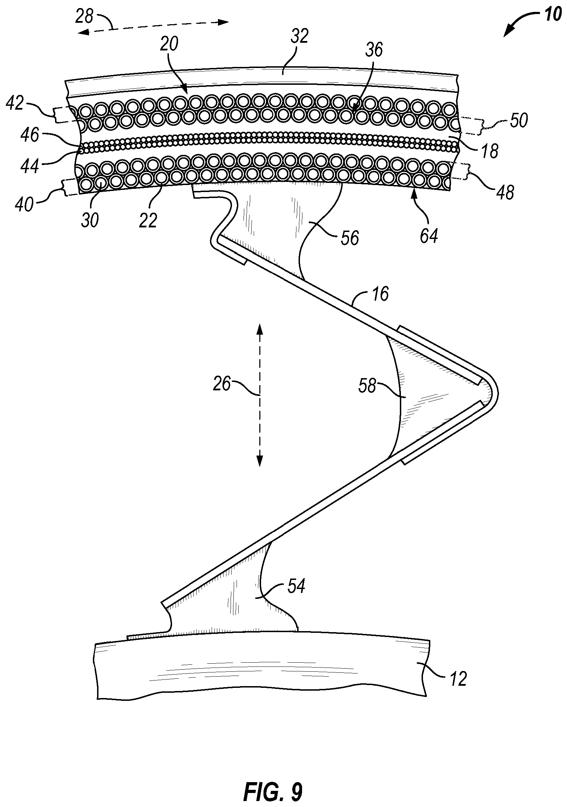

Fig. 9 is another embodiment of the non-pneumatic tire 10 in which the shear band 18 is again provided with a pair of cross-plied belts 44, 46 that engage one another and are oriented between 0-90 degrees to the circumferential direction 28 while sharing the same magnitude but being 90 degrees oppositely oriented. The cross-plied belts 44, 46 are free from engagement with any of the weight reduction elements 22, and although shown as being visible at the first terminal lateral end 36 could be completely contained within the matrix 20 in other embodiments so that they are spaced from the terminal lateral ends 36, 38 and not visible from outside of the non-pneumatic tire 10. The shear band 18 differs from the Fig. 8 embodiment in that a third layer 48 of the elements 22 are present and are between the first layer 40 and the cross-plied belts 44, 46 in the radial direction 26. The elements of the third layer 48 engage those of the first layer 40 and portions are in fact closer to the inner surface 64 in the radial direction 26. Further, a fourth layer 50 of weight reduction elements 22 are present between the second layer 42 and the cross-plied belts 44, 46 in the radial direction 26. The elements 22 in the fourth layer 50 engage the elements 22 in the second layer 42 and a portion are farther from the inner surface 64 in the radial direction 26. The cross-plied belts 44, 46 do not engage any of the weight reduction elements 22 and are separated from them via the matrix 20. Further, the second layer 42 is spaced from the outer surface of the shear band 18 and do not engage the tread 32. In this regard, the matrix 18 is between the outer surface of the shear band 18 and the elements 22 of the second layer 42 in the radial direction 26 and the matrix 18 engages the tread 32.

The embodiments with the cross-plied belts 44, 46 in Figs. 8 and 9 can be used when the non-pneumatic tire 10 needs cornering stiffness. The cylinders may be 3 millimeters in radius with a thickness t between 0.5-0.75 millimeters. The 16 millimeter thick shear band 18 if constructed as shown in Fig. 8 may have a weight savings over a standard shear band 18 as discussed of 24% - 34%. A 27 millimeter thick shear band 18 can be constructed with two layers on either side of the cross-plied belts 44, 46 as shown in Fig. 9 and using the geometry yields a weight savings from 28% - 40% over a conventional shear band 18 as discussed.

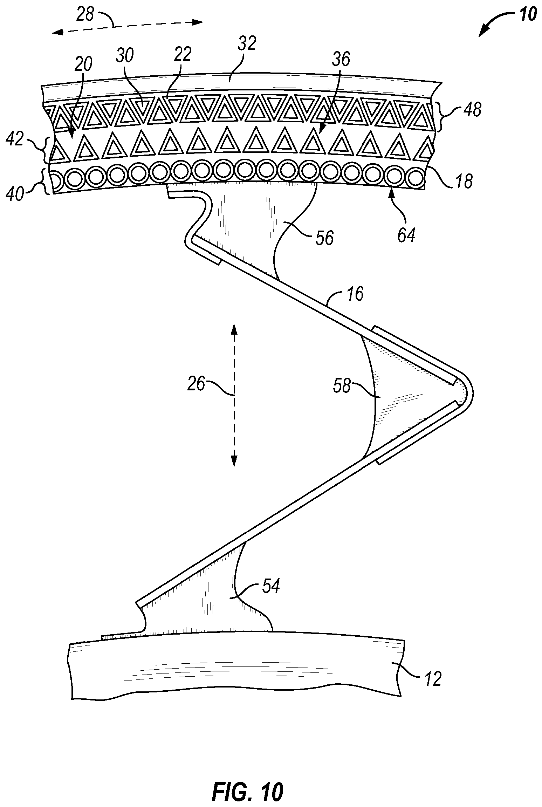

Fig. 10 shows an alternative exemplary embodiment in which the weight reduction elements 22 are not in the shape of hollow cylinders. The first layer 40 includes weight reduction elements 22 that have oval shaped cross-sections with voids 30 extending completely though the center that are likewise oval in shape. The second layer 42 is spaced from, and not in engagement with, the first layer 40 and includes weight reduction elements 22 that are triangular in cross-sectional shape. The voids 30 in the second layer 42 are likewise triangular in shape. The third layer 48 is spaced from the second layer 42 in the radial direction 26 and is not in engagement with the second layer 42. The third layer 48 includes triangular shaped weight reduction elements 22 that have triangular shaped voids within them, and immediately successive weight reduction elements 22 are oriented opposite to one another relative to the radial direction 26. In other embodiments, all of the weight reduction elements 22 in the tire 10 are configured as those shown in the third layer 48. It is to be understood that the shapes, including the cross-sectional shapes, of the weight reduction elements 22 could be variously configured in accordance with different exemplary embodiments and that those disclosed are only exemplary. The cross-sectional shape could vary along the widths of the weight reduction elements 22 in the axial direction 24. This is likewise true with respect to the shapes of the voids 30. Also, although shown as extending completely through and thus along the entire width of the weight reduction elements 22, the voids 30 may not be through voids and may only extend through some but not all of the weight reduction elements 22. Although shown as having a single void 30, the weight reduction elements 22 could have multiple voids in other embodiments. The weight reduction elements 22 in the shear band 18 may all be configured the same as one another, or different designs of the weight reduction elements 22 could be found in the same shear band 18. Further, although shown as being organized into layers 40, 42, 48, 50 and/or 52 it is to be understood that the weight reduction elements 22 need not be placed into these layers in other embodiments such that the elements 22 are present at different distances in the radial direction 26 from the central axis 14 but are not in layers.

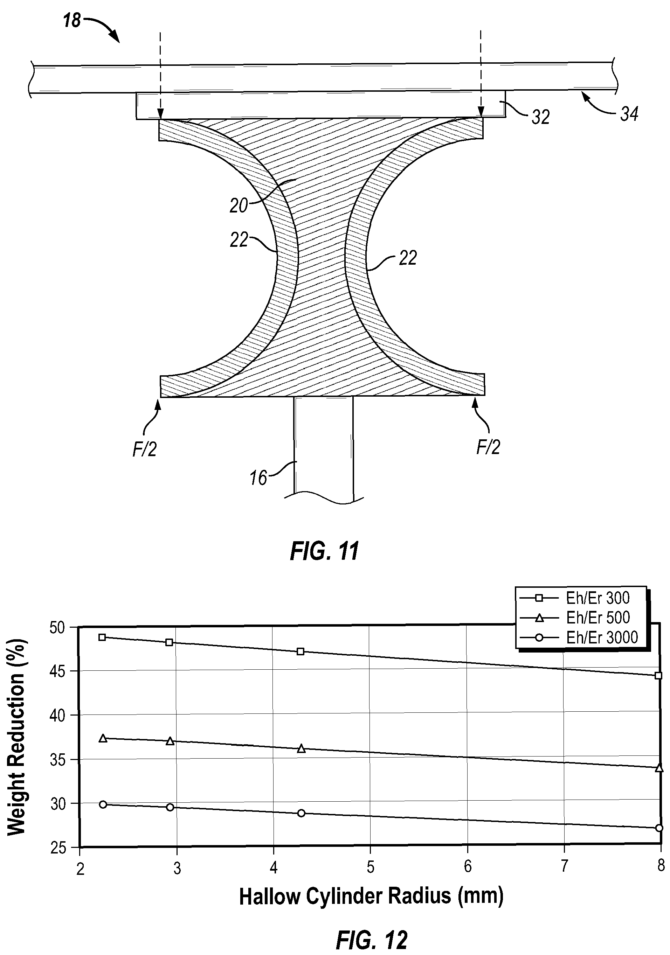

The provision of the weight reduction elements 22 in the construction of the shear band 18 provides reductions in the non-pneumatic tire 10 weight and rolling resistance, while maintaining or even improving the shear band 18 fatigue resistance. Fig. 11 shows half of two different weight reduction elements 22 in a shear beam 18 in which the weight reduction elements 22 do not touch one another but are instead separated by the matrix 20. It is to be understood that in all of the previous embodiments that they can be modified in this manner so that some or none of the immediately successive weight reduction elements 22 engage one another but are instead separated by the matrix 20. The deformation $\delta$ of the shear band 18 (in the direction of the applied force) can be determined using Castigliano's theorem at the location shown in Fig. 11. In the Figure, the support structure 16 is resisting motion in the direction of the ground/road surface 34 and the force on the road surface 34 causes the reaction forces F/2.

The deformation $\delta = \frac{\pi F r^3}{4 E_h I}$ ; where $E_h$ is the modulus of elasticity of the weight reduction element 22, and where I is the moment of inertia of the weight reduction element 22 that can be calculated from the shear band width b and the thickness t of the cylindrical weight reduction element 22, $\left(\frac{b t^3}{12}\right)$ . The cylinder effective radius r can be measured as the average of its inner and outer radii. For simplification purposes, the additional beam resistance provided by possible contact between the two weight reduction elements 22 is neglected. The reaction force F is assumed to be applied only on the weight reduction elements 22 and not the matrix 20. With these parameters in play the aforementioned deformation $\delta$ can be set to equal the deformation $\delta$ of a conventional shear band 18 that lacks the weight reduction elements 22 that can be calculated as deformation conventional $\delta = \frac{F h}{E_r A}$ in which $E_r$ is of the rubber composite state of the art shear band 18 modulus, A is the area where the force is applied (A=2rb), and h is the shear band 18 thickness.

The shear band 18 thickness h can be approximated by being twice the effective radius r of the cylinder (in the case of a shear band 18 constructed with only one layer 40 of weight reduction elements 22), and after substitutions the following equation relating the ratio of the two shear bands' 18 moduli of elasticity to the hollow cylinder thickness to radius ratio can be obtained as $\frac{t}{r} = (3\pi \frac{E_r}{E_h})^{1/3}$. In this equation $E_r$ is the modulus of elasticity of the shear band 18 that has the weight reduction cylinders 22, and $E_h$ is the modulus of elasticity of the state of the art shear band 18 that lacks the weight reduction cylinders 22. In various embodiments, the $E_h$ is that of a composite glass-resin material and is from 30-50 Gigapascals, and $E_r$ can be from 0.01-0.1 Gigapascals representing a standard rubber compound on the low end and a composite rubber-glass resin on the higher end.

The weight savings of a shear band 18 construction can be calculated by using an example, such as by considering the shear band 18 construction of Fig. 6 in which three layers 40, 42, 48 of the weight reduction elements 22 are present. In this instance, the thickness h of the shear band 18 is calculated as $h = (2 + (n-1) 3^{0.5}) r$, in which n is the number of layers (3) and r is the radius of each one of the cylinders. If h is 16 millimeters, r is calculated in this equation as being 2.93 millimeters. The matrix 20 thickness between the cylinder layers is neglected in this calculation. The cylinders are nested between successive layers 40, 42, 48 for optimum placement. If in this example $E_r$ is 0.1 Gigapascal and $E_h$ 30.0 Gigapascals, with r being 2.93 millimeters, the thickness t of the hollow cylinder can be calculated from $\frac{t}{r} = (3\pi \frac{E_r}{E_h})^{1/3}$. In this instance, t is 0.92 millimeters.

The next calculation to make is a determination of the void 30 volume that is achieved by a cylinder of the aforementioned size in the shear beam 18 being considered. The void volume $V_v = \pi * n * N * b * (r-t)^2$, in which t is 0.92 millimeters, r is 2.93 millimeters, b is 250 millimeters, n is 3, and N is the number of hollow cylinders for each layer around the non-pneumatic tire 10 circumference which is $N = \pi R/r = \pi 370 mm/2.93 mm = \pi (126.28) = 396.7$. Converting the variables to centimeters and calculating we obtain for $V_v = \pi * 3 * 396.7 * 25$ centimeters * $(0.293$ centimeters - $0.092$ centimeters$)^2 = 3776$ cubic centimeters.

The volume occupied by all of the hollow cylinders of the shear band 18 can then be calculated as $V_c = \pi * n * N * b * (r^2 - (r-t)^2) = \pi * 3 * 396.7 * 25$ centimeters * $((0.293$ centimeters$)^2 - (0.293$ centimeters - $0.092$ centimeters$)^2) = 4243$ cubic centimeters.

The weight of the new shear band 18 with the hollow cylinders can now be calculated as $W_n$ but to do so, the densities of the hollow cylinder material and of the composite state of the art shear band 18 must be provided. In the example, $p_c = 0.002$ Kilograms/cubic centimeters; and $p_r = 0.0016$ Kilograms/cubic centimeters in which $p_c$ is the density of the hollow cylinder material, and $p_r$ is the density of the rubber or composite state of the art shear band 18. The weight of the initial shear band 18 is $W = 2 * \pi * R * b * h * p_r = 2 * \pi * 37$ centimeters * 25 centimeters * 1.6 centimeters * 0.0016 Kilograms/cubic centimeters = 14.8 Kilograms. The weight of the modified shear band with the hollow cylinders is calculated as $W_n = V_c * p_c + (2 * \pi * R * b * (h - V_v - V_c) * p_r = 4243$ cubic centimeters * 0.002 Kilograms/cubic centimeters + ((2 * $\pi$ * 37 centimeters * 25 centimeters * 1.6 centimeters) - 3776 cubic centimeters - 4243 cubic centimeters) * 0.0016 Kilograms/cubic centimeters = 10.5 Kilograms. The weight savings between the 14.8 Kilograms and 10.5 Kilograms is 29%. In this regard, the provision of a shear band 18 that has hollow cylinders in it yields a weight savings of 29% over those of conventional construction with the hollow cylinders for increased handling and rolling resistance without compromising shear band 18 fatigue resistance. Since the non-pneumatic tire 10 rolling resistance is proportional to the shear band 18 weight, a reduction of the tire rolling resistance coefficient is also expected when using the shear band 18 with the hollow cylinder construction. The actual gains are a bit harder to quantify because they will also be dependent upon the material hysteretic properties and the tire duty cycle.

Fig. 12 shows weight savings that can be obtained with a hollow cylinder construction shear band 18 over a reference shear band 18 that has a thickness h of 16 millimeters, an $E_r$ between 0.01 Gigapascal (for a standard rubber compound) and 0.1 Gigapascal (for a composite rubber-glass-resin). The hollow shear band 18 is made of a composite glass-resin material with $E_h$ between 30-50 Gigapascals. The four data points correspond to the number of cylinder layers within the shear band 18 going from 1 which has the highest cylinder radius to 4 which has the lowest cylinder radius.

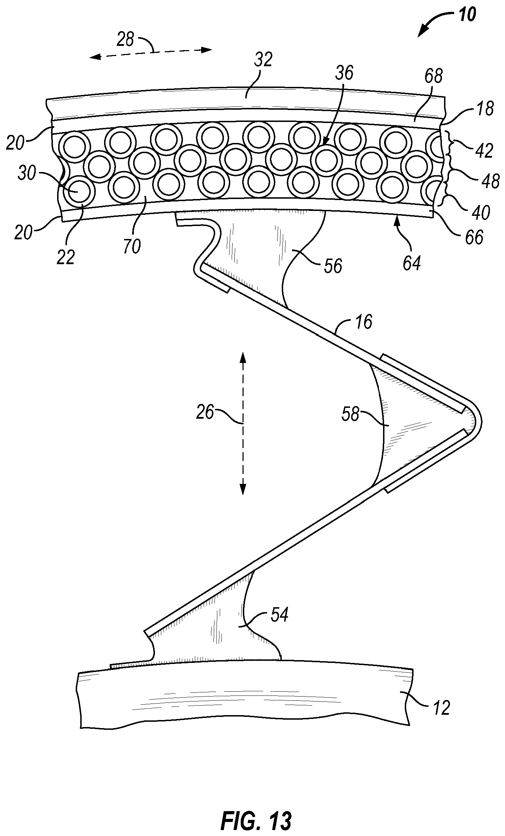

One other arrangement of the shear band 16 is shown with reference to Fig. 13 in which a first plate 66 of the shear band 18 engages the spoke 16, and a second plate 68 engages the tread 32. The weight reduction elements 22 of each layer 40, 42, 48 are not shown as touching subsequent weight reduction elements 22 of their particular layer 40, 42, 48 but they could touch one another in other embodiments.

To maximize weight savings the radius of the weight reduction elements 22 should be as small as manufacturing allows. Current manufacturing processes put a lower limit of about 3 millimeters for the radius of the cylinder with a thickness t between 0.5 - 0.75 millimeters. The $E_h$ would be from 30-50 Gigapascal, and a conventional shear band 18 would have an $E_r$ between 0.01-0.03 Gigapascal. The conventional shear band could be replaced with a shear band 18 having three layers 40, 42, 48 when the thickness of the shear beam h is about 16 millimeters. The design with the weight reduction elements 22 provides a shear beam 18 weight reduction of 28% - 43%. For shear bands 18 having a 5 layer 40, 42, 48, 50, 52 configuration when the shear band 18 thickness is about 27 millimeters for heavier loads, the weight reduction of the shear band 18 from that of a conventional shear band 18 is from 30% - 45%.

The previously described embodiments include a matrix 20 that is rubber between the weight reduction elements 22 and is between the first and second plates 66, 68. In alternative embodiments, there is no rubber between the weight reduction elements 22 such that the area identified by reference number 70 is empty. In these embodiments, the matrix 20 is the first plate 66 and second plate 68 and the material composition making up the plates 66, 68 is different from that making up the weight reduction elements 22. In these constructions of the shear band 18, a weight savings of 40% - 55% is attained as compared to a convention shear band 18 without the weight reduction elements 22. When five layers 40, 42, 48, 50, 52 of the weight reduction elements 22 are used instead of 3 with the void 70 and plates 66, 68, the shear band 18 weight reduction savings over a conventional shear band 18 are from 41% - 56%.

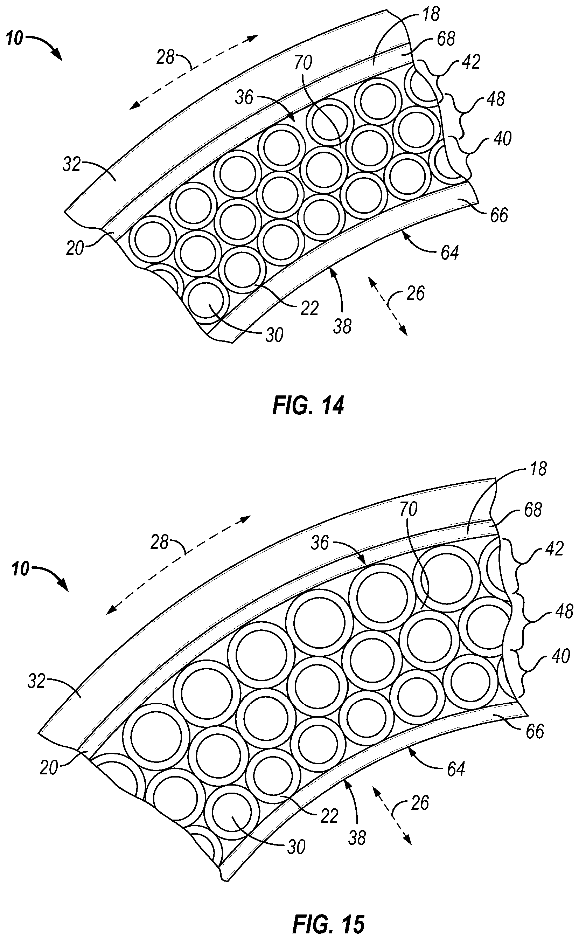

In previous embodiments, it was stated that an increasing number of weight reduction elements 22 were present in the increasing layers 40, 42, 48, 50, 52 upon moving outward in the radial direction 26 due to a larger distance in the circumferential direction 28 being present as the distance in the radial direction 26 increases from the central axis 14. In other embodiments, the same number of weight reduction elements 22 may be present in all of the layers 40, 42, 48, 50, 52 and the difference in circumferential length depending upon the location of the layer 40, 42, 48, 50, 52 in the radial direction 28 can be accommodated by changing the spacing of the weight reduction elements 22 in each one of the layers 40, 42, 48, 50, 52. Fig. 14 shows one embodiment of the shear band 18 in which the matrix 20 is made of the plates 66, 68, that can be rubber or can be of any various material or combination of material, and in which an empty space 70 is present between the plate 66, 68 and between the weight reduction elements 22. The weight reduction elements 22 of the first layer 40 all engage one another, that is immediately successive ones engage one another, and engage the first plate 66. The third layer 48 is located outward from the first layer 40 in the radial direction 26 and engages the first layer 40 and has a larger circumferential length about the central axis 14 in the circumferential direction 28. The third layer 48 has the same number of elements 22 as the first layer 40 but they are spaced from one another such that successive ones of the elements 22 of the third layer 48 do not engage one another but are spaced from one another. However, all of the weight reduction elements 22 of the third layer 48 engage weight reduction elements 22 of the first layer 40. The second layer 42 has the same number of weight reduction elements 22 as does the first layer 40 and the third layer 48. In order to accommodate the increased circumferential length, the successive weight reduction elements 22 of the second layer 42 are spaced from and not in engagement with one another and are spaced from one another even further than the successive elements 22 in the third layer 48. In other embodiments, there can be material of the matrix 20 within the space 70.

Fig. 15 shows another exemplary embodiment in which the weight reduction elements 22 in each one of the three layers 40, 48, 42 are in contact with immediately successive ones of the weight reduction elements 22 in that layer 40, 48, 42. The radii of the weight reduction elements 22 in each layer 40, 48, 42 is the same in that layer, but the radii of the different layers 40, 48, 42 are different. In this regard, the radii of the elements 22 in the first layer 40 are less than the radii of the elements 22 of the outward third layer 48. Further, the radii of the elements 22 of the second layer 42 are greater than the radii of the elements 22 of the third layer 48. The second layer 42 engages the plate 68, and the first layer 40 engages the plate 66. There is no material in the space 70, but in other embodiments the space 70 could be filled with rubber or other material and be part of the matrix 20.

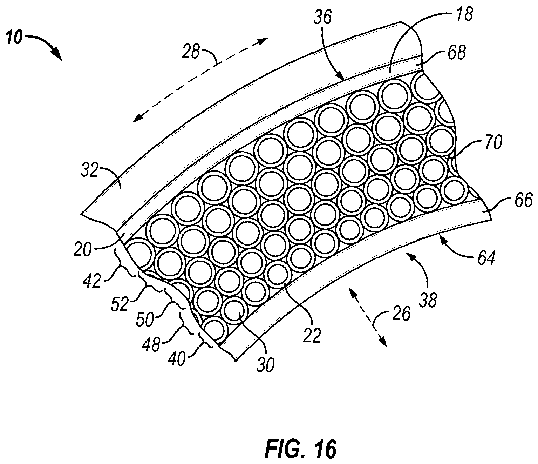

Fig. 16 is an embodiment just like that immediately discussed with respect to Fig. 15 but includes two additional layers 50 and 52 so that the shear band 18 includes five layers 40, 42, 48, 50, 52 of weight reduction elements 22. The layers 40 and 48 are the same as previously discussed with respect to Fig. 15. The layers 42, 50 and 52 all include weight reduction elements 22 that are the same radius within that particular layer 42, 50 and 52, and that engage the immediately successive weight reduction elements 22 within their particular layer 42, 50, 52. The weight reduction elements 22 in the fourth layer 50 engage two of the weight reduction elements 22 in the third layer 48. The weight reduction elements 22 of the fifth layer 52 engage two of the weight reduction elements 22 of the fourth layer 50. Also, the weight reduction elements 22 of the second layer 42 each engage two of the weight reduction elements 22 of the fifth layer 52. It may be the case that there is the same number of weight reduction elements 22 in each one of the layers 40, 42, 48, 50, 52 or there may be a different number of weight reduction elements 22 in different layers in some embodiments.

The shear band 18 has been described in some embodiments as including only the matrix 20 and the weight reduction elements 22, but it is to be understood that other embodiments exist in which additional components are present within the shear band 18. In yet other embodiments the matrix 20 is not present in some areas such that additional voids are present between some or all of the weight reduction elements 22. As such, it is to be understood that the matrix 20 can be variously configured to be within the shear band 18 and need not engage some of the weight reduction elements 22 in some configurations.

While the present subject matter has been described in detail with respect to specific embodiments and methods thereof, it will be appreciated that those skilled in the art, upon attaining an understanding of the foregoing may readily produce alterations to, variations of, and equivalents to such embodiments. **The** , scope of the present invention is defined by the claims.

**Claims**

1. A non-pneumatic tire (10), comprising:

   a hub (12)
   through which a central axis (14)
   extends in an axial direction (24);
   a support structure (16)
   that is located outward from the hub (12)
   in a radial direction (26);
   a shear band (18)
   located outward from the support structure (16)
   in the radial direction (26),
   wherein the shear band (18)
   has a matrix (20)
   and a plurality of weight reduction elements (22)
   in the matrix that extend in the axial direction (24),
   wherein each one of the weight reduction elements (22)
   defines a void (30)
   and is made of a material composition different than that of the matrix (20),
   wherein at least some of the weight reduction elements (22)
   **form** at least one layer (40, 42)
   in that the weight reduction elements (22)
   **of** the layer (40, 42)
   are all located the same distance (60)
   from the central axis (14)
   in the radial direction (26)
   and engage immediately successive ones of the weight reduction elements (22)
   **of** the layer (40, 42);
   and
   a tread (32)
   located outward from the shear band (18)
   in the radial direction (26)
   and configured for engagement with a road surface;
   wherein some of the weight reduction elements (22)
   are located in the layer that is a first layer (40)
   that is an inner layer of the weight reduction elements (22)
   in the radial direction (26),
   **characterised in that**
   some of the weight reduction elements (22)
   are located in a second layer (42)
   that is an outer layer of the weight reduction elements (22)
   in the radial direction (26),
   wherein the second layer (42) is located farther from the central axis (14) of the hub (12) in the radial direction (26)
   than the first layer (40)
   is located from the central axis (14) of the hub (12) in the radial direction (26).

2. The non-pneumatic tire as set forth in claim 1, wherein the weight reduction elements (22) **are** made of a material that is not present in the matrix (20).

3. The non-pneumatic tire as set forth in claim 1 or 2, wherein the weight reduction elements (22) are made of a composite glass-resin.

4. The non-pneumatic tire as set forth in any one of claims 1-3, wherein the modulus of elasticity of one of the weight reduction elements (22) is 30-50 Gigapascal (GPa).

5. The non-pneumatic tire as set forth in any one of claims 1-4, wherein each one of the weight reduction elements (22) is in the shape of a hollow cylinder wherein the void (30) defined by each one of the weight reduction elements (22) is located inside of the hollow cylinder.

6. The non-pneumatic tire as set forth in claim 5, wherein the shear band (18) has a first terminal lateral end (36) and a second terminal lateral end (38) that are spaced from one another in the axial direction (24), wherein the weight reduction elements (22) extend from the first terminal lateral end (36) to the second terminal lateral end (38).

7. The non-pneumatic tire as set forth in claim 1, wherein the shear band (18) has at least two cross-plied belts (44) located between the first layer (40) and the second layer (42) in the radial direction (26).

8. The non-pneumatic tire as set forth in any one of claims 1, 6 or 7, wherein immediately successive ones of the weight reduction elements (22) in a circumferential direction (28) engage one another.

9. The non-pneumatic tire as set forth in claim 1, wherein some of the weight reduction elements (22) are located in a third layer (48) that is located farther from the central axis (14) in the radial direction (26) than the first layer (40) is to the central axis (14) in the radial direction (26), wherein the third layer (48) is located closer to the central axis (14) in the radial direction (26) than the second layer (42) is located to the central axis (14) in the radial direction (26); wherein the weight reduction elements (22) in the third layer (48) each engage two different ones of the weight reduction elements (22) in the first layer (40) such that portions of the weight reduction elements (22) in the third layer (48) are located closer to the central axis (14) in the radial direction (26) than portions of the first layer (40) are to the central axis (14) in the radial direction (26).

10. The non-pneumatic tire as set forth in claim 9, wherein some of the weight reduction elements (22) are located in a fourth layer (50) that is located farther from the central axis (14) in the radial direction (26) than the third layer (48) is to the central axis (14) in the radial direction (26), wherein the fourth layer (50) is located closer to the central axis (14) in the radial direction (26) than the second layer (42) is located to the central axis (14) in the radial direction (26);

wherein the weight reduction elements (22) in the fourth layer (50) each engage two different ones of weight reduction elements (22) in the third layer (48) such that portions of the weight reduction elements (22) in the third layer (48) are located closer to the central axis (14) in the radial direction (26) than portions of the fourth layer (50) are to the central axis (14) in the radial direction (26);
wherein some of the weight reduction elements (22) are located in a fifth layer (52) that is located farther from the central axis (14) in the radial direction (26) than the fourth layer (50) is to the central axis (14) in the radial direction (26), wherein the fifth layer (52) is located closer to the central axis (14) in the radial direction (26) than the second layer (42) is located to the central axis (14) in the radial direction (26);
wherein the weight reduction elements (22) in the fifth layer (52) each engage two different ones of weight reduction elements (22) in the fourth layer (50) such that portions of the weight reduction elements (22) in the fourth layer (50) are located closer to the central axis (14) in the radial direction (26) than portions of the fifth layer (52) are to the central axis (14) in the radial direction (26).

11. The non-pneumatic tire as set forth in claim 1, wherein the weight reduction elements (22) of the second layer (42) have a greater radius than the weight reduction elements of the first layer (40).

12. The non-pneumatic tire as set forth in claim 11, wherein the first layer (40) and the second layer (42) have the same number of the weight reduction elements

13. The non-pneumatic tire as set forth in any one of claims 1-12, wherein the matrix (20) is made of rubber or is made of composite rubber-fiber-resin compound.

14. The non-pneumatic tire as set forth in any one of claims 1-13, wherein the support structure (16) is a plurality of spokes.

**Patentansprüche**

1. Luftloser Reifen (10), umfassend:

eine Nabe (12), durch die sich eine Mittelachse (14) in einer Achsenrichtung (24) erstreckt;
eine Stützstruktur (16), die sich in einer radialen Richtung (26) außerhalb der Nabe (12) befindet;
ein Scherband (18), das sich in der radialen Richtung (26) außerhalb der Stützstruktur (16) befindet, wobei das Scherband (18) eine Matrix (20) und mehrere Gewichtsreduktionselemente (22) in der Matrix aufweist, die sich in der Achsenrichtung (24) erstrecken, wobei jedes der Gewichtsreduktionselemente (22) einen Hohlraum (30) definiert und aus einer Materialzusammensetzung gefertigt ist, die sich von der der Matrix (20) unterscheidet, wobei mindestens einige der Gewichtsreduktionselemente (22) mindestens eine Schicht (40, 42) bilden, indem sich die Gewichtsreduktionselemente (22) der Schicht (40, 42) in der radialen Richtung (26) im selben Abstand (60) von der Mittelachse (14) befinden und mit unmittelbar aufeinanderfolgenden der Gewichtsreduktionselemente (22) der Schicht (40, 42) eingreifen; und
eine Lauffläche (32), die sich in der radialen Richtung (26) außerhalb des Scherbands (18) befindet und zum Eingriff mit einer Straßenoberfläche konfiguriert ist;
wobei sich einige der Gewichtsreduktionselemente (22) in der Schicht befinden, die eine erste Schicht (40) ist, die in der radialen Richtung (26) eine innere Schicht der Gewichtsreduktionselemente (22) ist, **dadurch gekennzeichnet, dass** sich einige der Gewichtsreduktionselemente (22) in einer zweiten Schicht (42) befinden, die in der radialen Richtung (26) eine äußere Schicht der Gewichtsreduktionselemente (22) ist, wobei sich die zweite Schicht (42) in der radialen Richtung (26) weiter entfernt von der Mittelachse (14) der Nabe (12) befindet, als sich die erste Schicht (40) in der radialen Richtung (26) von der Mittelachse (14) der Nabe (12) befindet.

2. Luftloser Reifen nach Anspruch 1, wobei die Gewichtsreduktionselemente (22) aus einem Material gefertigt sind, das in der Matrix (20) nicht vorkommt.

3. Luftloser Reifen nach Anspruch 1 oder 2, wobei die Gewichtsreduktionselemente (22) aus einem Glas-Harz-Verbundwerkstoff bestehen.

4. Luftloser Reifen nach einem der Ansprüche 1-3, wobei der Elastizitätsmodul eines der Gewichtsreduktionselemente (22) 30-50 Gigapascal (GPa) beträgt.

**5.** Luftloser Reifen nach einem der Ansprüche 1-4, wobei jedes der Gewichtsreduktionselemente (22) die Form eines hohlen Zylinders hat, wobei sich der Hohlraum (30), der von jedem der Gewichtsreduktionselemente (22) definiert wird, innerhalb des hohlen Zylinders befindet.

**6.** Luftloser Reifen nach Anspruch 5, wobei das Scherband (18) ein erstes seitliches Abschlussende (36) und ein zweites seitliches Abschlussende (38) aufweist, die in der Achsenrichtung (24) voneinander beabstandet sind, wobei sich die Gewichtsreduktionselemente (22) von dem ersten seitlichen Abschlussende (36) zu dem zweiten seitlichen Abschlussende (38) erstrecken.

**7.** Luftloser Reifen nach Anspruch 1, wobei das Scherband (18) mindestens zwei kreuzlagige Bänder (44) aufweist, die sich in der radialen Richtung (26) zwischen der ersten Schicht (40) und der zweiten Schicht (42) befinden.

**8.** Luftloser Reifen nach einem der Ansprüche 1, 6 oder 7, wobei unmittelbar aufeinanderfolgende der Gewichtsreduktionselemente (22) in einer Umfangsrichtung (28) miteinander eingreifen.

**9.** Luftloser Reifen nach Anspruch 1, wobei sich einige der Gewichtsreduktionselemente (22) in einer dritten Schicht (48) befinden, die sich in der radialen Richtung (26) weiter von der Mittelachse (14) entfernt befindet, als sich die erste Schicht (40) in der radialen Richtung (26) von der Mittelachse (14) befindet, wobei sich die dritte Schicht (48) in der radialen Richtung (26) näher bei der Mittelachse (14) befindet, als sich die zweite Schicht (42) in der radialen Richtung (26) bei der Mittelachse (14) befindet, wobei die Gewichtsreduktionselemente (22) in der dritten Schicht (48) jeweils mit zwei verschiedenen der Gewichtsreduktionselemente (22) in der ersten Schicht (40) eingreifen, sodass sich Abschnitte der Gewichtsreduktionselemente (22) in der dritten Schicht (48) in der radialen Richtung (26) näher bei der Mittelachse (14) befinden als sich Abschnitte der ersten Schicht (40) in der radialen Richtung bei der Mittelachse (14) befinden.

**10.** Luftloser Reifen nach Anspruch 9, wobei sich einige der Gewichtsreduktionselemente (22) in einer vierten Schicht (50) befinden, die sich in der radialen Richtung (26) weiter von der Mittelachse (14) entfernt befindet als sich die dritte Schicht (48) in der radialen Richtung (26) von der Mittelachse (14) befindet, wobei sich die vierte Schicht (50) in der radialen Richtung (26) näher bei der Mittelachse (14) befindet als sich die zweite Schicht (42) in der radialen Richtung (26) bei der Mittelachse (14) befindet;

wobei die Gewichtsreduktionselemente (22) in der vierten Schicht (50) jeweils mit zwei verschiedenen von Gewichtsreduktionselementen (22) in der dritten Schicht (48) eingreifen, sodass sich Abschnitte der Gewichtsreduktionselemente (22) in der dritten Schicht (48) in der radialen Richtung (26) näher bei der Mittelachse (14) befinden als sich Abschnitte der vierten Schicht (50) in der radialen Richtung (26) bei der Mittelachse (14) befinden;

wobei sich einige der Gewichtsreduktionselemente (22) in einer fünften Schicht (52) befinden, die sich in der radialen Richtung (26) weiter von der Mittelachse (14) entfernt befindet als sich die vierte Schicht (50) in der radialen Richtung (26) von der Mittelachse (14) befindet, wobei sich die fünfte Schicht (52) in der radialen Richtung (26) näher bei der Mittelachse (14) befindet als sich die zweite Schicht (42) in der radialen Richtung (26) bei der Mittelachse (14) befindet;

wobei die Gewichtsreduktionselemente (22) in der fünften Schicht (52) jeweils mit zwei verschiedenen Gewichtsreduktionselementen (22) in der vierten Schicht (50) eingreifen, sodass sich Abschnitte der Gewichtsreduktionselemente (22) in der vierten Schicht (50) in der radialen Richtung (26) näher bei der Mittelachse (14) befinden als sich Abschnitte der fünften Schicht (52) in der radialen Richtung (26) bei der Mittelachse (14) befinden.

**11.** Luftloser Reifen nach Anspruch 1, wobei die Gewichtsreduktionselemente (22) der zweiten Schicht (42) einen größeren Radius als die Gewichtsreduktionselemente der ersten Schicht (40) aufweisen.

**12.** Luftloser Reifen nach Anspruch 11, wobei die erste Schicht (40) und die zweite Schicht (42) dieselbe Anzahl der Gewichtsreduktionselemente (22) aufweisen.

**13.** Luftloser Reifen nach einem der Ansprüche 1-12, wobei die Matrix (20) aus Gummi gefertigt ist oder aus Gummi-Faser-Harz-Verbundwerkstoff gefertigt ist.

**14.** Luftloser Reifen nach einem der Ansprüche 1-13, wobei die Stützstruktur (16) mehrere Speichen sind.

**Revendications**

**1.** Pneu non pneumatique (10), comprenant :

un moyeu (12) à travers lequel un axe central (14) s'étend dans une direction axiale (24) ;
une structure de support (16) située à l'extérieur du moyeu (12) dans une direction radiale (26) ; une bande de cisaillement (18) située à l'extérieur de la structure de support (16) dans la direction radiale (26), dans lequel la bande de cisaillement (18) comporte une matrice (20) et une pluralité d'éléments de réduction de poids (22) dans la matrice, lesquels s'étendent dans la direction axiale (24), dans lequel chacun des éléments de réduction de poids (22) définit un vide (30) et est constitué d'une composition de matériau différente de celle de la matrice (20), dans lequel au moins certains des éléments de réduction de poids (22) forment au moins une couche (40, 42), où les éléments de réduction de poids (22) de la couche (40, 42) se trouvent tous à la même distance (60) de l'axe central (14) dans la direction radiale (26) et engagent des éléments de réduction de poids (22) immédiatement successifs de la couche (40, 42) ; et une bande de roulement (32) située à l'extérieur de la bande de cisaillement (18) dans la direction radiale (26) et configurée pour s'engager avec une surface de route ; dans lequel certains des éléments de réduction de poids (22) se situent dans la couche correspondant à une première couche (40), laquelle est une couche intérieure des éléments de réduction de poids (22) dans la direction radiale (26), **caractérisé en ce que** certains des éléments de réduction de poids (22) se situent dans une deuxième couche (42) correspondant à une couche extérieure des éléments de réduction de poids (22) dans la direction radiale (26), dans lequel la deuxième couche (42) est plus éloignée de l'axe central (14) du moyeu (12) dans la direction radiale (26) que ne l'est la première couche (40) par rapport à l'axe central (14) du moyeu (12) dans la direction radiale (26) .

2. Pneu non pneumatique selon la revendication 1, dans lequel les éléments de réduction de poids (22) sont constitués d'un matériau non présent dans la matrice (20) .

3. Pneu non pneumatique selon la revendication 1 ou 2, dans lequel les éléments de réduction de poids (22) sont constitués d'une résine de verre composite.

4. Pneu non pneumatique selon l'une quelconque des revendications 1 à 3, dans lequel le module d'élasticité de l'un des éléments de réduction de poids (22) est de 30 à 50 Gigapascal (GPa).

5. Pneu non pneumatique selon l'une quelconque des revendications 1 à 4, dans lequel chacun des éléments de réduction de poids (22) présente la forme d'un cylindre creux, dans lequel le vide (30) défini par chacun des éléments de réduction de poids (22) se situe à l'intérieur du cylindre creux.

6. Pneu non pneumatique selon la revendication 5, dans lequel la bande de cisaillement (18) comporte une première extrémité latérale terminale (36) et une deuxième extrémité latérale terminale (38), lesquelles sont espacées l'une de l'autre dans la direction axiale (24), dans lequel les éléments de réduction de poids (22) s'étendent de la première extrémité latérale terminale (36) vers la deuxième extrémité latérale terminale (38).

7. Pneu non pneumatique selon la revendication 1, dans lequel la bande de cisaillement (18) comporte au moins deux courroies pliées en diagonale (44) situées entre la première couche (40) et la deuxième couche (42) dans la direction radiale (26).

8. Pneu non pneumatique selon l'une quelconque des revendications 1, 6 ou 7, dans lequel des éléments immédiatement successifs parmi les éléments de réduction de poids (22) dans une direction circonférentielle (28) s'engagent les uns avec les autres.

9. Pneu non pneumatique selon la revendication 1, dans lequel certains des éléments de réduction de poids (22) se situent dans une troisième couche (48), laquelle est plus éloignée de l'axe central (14) dans la direction radiale (26) que ne l'est la première couche (40) par rapport à l'axe central (14) dans la direction radiale (26), dans lequel la troisième couche (48) est plus proche de l'axe central (14) dans la direction radiale (26) que ne l'est la deuxième couche (42) par rapport à l'axe central (14) dans la direction radiale (26) ; dans lequel les éléments de réduction de poids (22) dans la troisième couche (48) engagent respectivement deux éléments différents parmi les éléments de réduction de poids (22) dans la première couche (40), de sorte que des parties des éléments de réduction de poids (22) dans la troisième couche (48) sont plus proches de l'axe central (14) dans la direction radiale (26) que ne le sont des parties de la première couche (40) par rapport à l'axe central (14) dans la direction radiale (26).

10. Pneu non pneumatique selon la revendication 9, dans lequel certains des éléments de réduction de poids (22) se situent dans une quatrième couche (50), laquelle est plus éloignée de l'axe central (14) dans la direction radiale (26) que ne l'est la troisième couche (48) par rapport à l'axe central (14) dans la direction radiale (26), dans lequel la quatrième couche (50) est plus proche de l'axe central (14) dans la direction radiale (26) que ne l'est la deuxième couche (42) par rapport à l'axe central (14) dans la direction radiale (26) ;

dans lequel les éléments de réduction de poids (22) dans la quatrième couche (50) engagent respectivement deux éléments différents parmi les éléments de réduction de poids (22) dans la troisième couche (48), de sorte que des parties des éléments de réduction de poids (22) dans la troisième couche (48) sont plus proches de l'axe central (14) dans la direction radiale (26) que ne le sont des parties de la quatrième couche (50) par rapport à l'axe central (14) dans la direction radiale (26) ;

dans lequel certains des éléments de réduction de poids (22) se situent dans une cinquième couche (52), laquelle est plus éloignée de l'axe central (14) dans la direction radiale (26) que ne l'est la quatrième couche (50) par rapport à l'axe central (14) dans la direction radiale (26), dans lequel la cinquième couche (52) est plus proche de l'axe central (14) dans la direction radiale (26) que ne l'est la deuxième couche (42) par rapport à l'axe central (14) dans la direction radiale (26) ; dans lequel les éléments de réduction de poids (22) dans la cinquième couche (52) engagent respectivement deux éléments différents parmi les éléments de réduction de poids (22) dans la quatrième couche (50), de sorte que des parties des éléments de réduction de poids (22) dans la quatrième couche (50) sont plus proches de l'axe central (14) dans la direction radiale (26) que ne le sont des parties de la cinquième couche (52) par rapport à l'axe central (14) dans la direction radiale (26).

**11.** Pneu non pneumatique selon la revendication 1, dans lequel les éléments de réduction de poids (22) de la deuxième couche (42) présentent une plus grand rayon que les éléments de réduction de poids de la première couche (40).

**12.** Pneu non pneumatique selon la revendication 11, dans lequel la première couche (40) et la deuxième couche (42) présentent le même nombre d'éléments de réduction de poids (22).

**13.** Pneu non pneumatique selon l'une quelconque des revendications 1 à 12, dans lequel la matrice (20) est constituée de caoutchouc ou est constituée d'un composé composite de caoutchouc, fibres et résine.

**14.** Pneu non pneumatique selon l'une quelconque des revendications 1 à 13, dans lequel la structure de support (16) est une pluralité de rayons.

**FIG. 1**

**FIG. 2**

**FIG. 3**

FIG. 4

FIG. 5

**FIG. 6**

**FIG. 7**

FIG. 8

**FIG. 9**

**FIG. 10**

**FIG. 11**

**FIG. 12**

**FIG. 13**

**FIG. 14**

**FIG. 15**

**FIG. 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017008342 A1